# FASCICULE DE BREVET EUROPEEN

(11) **EP 0 391 789 B1**
(45) Date de publication et mention de la délivrance du brevet: **12.01.1994**
(21) Numéro de dépôt: 90400908.1
(22) Date de dépôt: 03.04.1990
(51) Int. Cl.: G01T 3/08, G01T 1/00

(54) **Dispositif individuel de mesure de l'équivalent de dose neutronique**
Individuelle Schaltung zur Messung des Neutronendosisäquivalents
Individual circuit for measuring the equivalent of a neutron dose

(30) Priorité: 05.04.1989 FR 8904469
(43) Date de publication de la demande: 10.10.1990
(73) Titulaire: COMMISSARIAT A L'ENERGIE ATOMIQUE, 75015 Paris Cédex 15 (FR)
(72) Inventeur: Decossas, Jean-Louis, F-87520 Oradour sur Glane (FR); Vareille, Jean-Claude, F-87420 Saint Victurnien (FR); Barthe, Jean, F-91300 Massy (FR); Portal, Guy, F-91300 Massy (FR)
(74) Mandataire: Mongrédien, André

(56) Documents cités:
- FR-A- 2 314 505
- US-A- 3 898 466
- US-A- 4 489 315
- IEEE TRANSACTIONS ON NUCLEAR SCIENCE, vol. NS-35, no. 1, février 1988, pages 575-578, IEEE, New York, US; F. SHIRAISHI et al.: "A new type personnel neutron dosimeter with thin Si detectors"

## Description

La présente invention a pour objet un dispositif individuel de mesure de l'équivalent de dose neutronique. Elle s'applique notamment à la radioprotection.

La sécurité du personnel technique et de recherche risquant d'être exposé à des radiations impose une surveillance constante des doses absorbées traduites en équivalent de dose, correspondant au risque biologique de la mesure physique. Il est important en particulier de déterminer la fluence neutronique, et par conversion, grâce à des coefficients de conversion définis expérimentalement et théoriquement par la Commission Internationale des unités de radiation (I.C.R.U.), l'équivalent de dose neutronique.

On connaît plusieurs dispositifs permettant de déterminer l'équivalent de dose neutronique.

Un premier dispositif utilise l'albédo des neutrons sur un corps qui engendre un flux de neutrons de basse énergie irradiant un corps thermoluminescent. Lorsque l'on chauffe le corps irradié, ce dernier émet de la lumière proportionnellement à la dose reçue. Ce dispositif présente l'inconvénient d'être un système passif ne délivrant le résultat de la mesure qu'après chauffage, opération qui ne permet pas de suivre en temps réel l'évolution des doses absorbées.

Un détecteur solide de traces constitue un autre type de détecteur passif. Un film soumis à une irradiation enregistre des traces correspondant à chaque traversée d'une particule lourde chargée. Un badge porté par l'utilisateur supporte ce film.

Pour être lu, ce film est développé ; cette opération dure environ quatre heures. Puis chaque trace enregistrée est associée au passage d'un certain type de particule pour enfin déterminer le débit de fluence neutronique qui permet de calculer l'équivalent de dose. On comprend que, cette fois encore, la mesure n'est pas instantanée ; la lecture des traces est une tâche ardue qui nécessite du temps : le traitement d'une centaine de badges nécessite environ une semaine.

Un second type de dispositif dit "compteur proportionnel equivalent tissu" est constitué d'une cathode fabriquée dans un matériau équivalent à un tissu biologique qui sous l'effet d'un bombardement neutronique émet des particules secondaires chargées. La mesure de la perte d'énergie de ces particules au cours de la traversée d'un gaz équivalent à un tissu biologique permet de déterminer l'équivalent de dose. Pour fonctionner, un tel dispositif nécessite une alimentation électrique délivrant une tension comprise entre 500 et 1 000 V, avec tous les problèmes et les dangers pour l'utilisateur engendrés par l'utilisation d'une haute tension.

Le document FR-A-2 314 505, déposé le 12 juin 1975, décrit un radiamètre, c'est-à-dire un dispositif pour mesurer la radioactivité ambiante à l'aide d'une unité de détection. Cette unité de détection comporte des détecteurs présentant des réponses spectrales différentes de façon à créer une compensation entre les inégalités de sensibilité individuelles qu'ils présentent, du fait de leur nature interne ou de leur environnement. Un tel dispositif ne permet donc pas de mesurer l'équivalent de dose correspondant au risque biologique.

Le document américain US-A-4 489 315 déposé le 18 décembre 1984 décrit également un dosemètre électronique individuel comprenant un détecteur à barrière de surface recouvert d'un convertisseur de neutrons et délivrant sur un compteur un signal numérique représentant l'équivalent de dose et cela par l'intermédiaire de plusieurs discriminateurs. Le détecteur est pourvu d'une source d'alimentation électrique de 4,5 V. Ce dosemètre a pour inconvénient, notamment, de laisser apparaître des bruits parasites ainsi que la contribution propre de la diode sous faisceau de neutrons.

Le but de la présente invention est de fournir un dispositif individuel mesurant l'équivalent de dose neutronique et ne présentant pas les inconvénients des détecteurs existants. Quelle que soit l'énergie des neutrons incidents, le débit de fluence neutronique est converti en un taux de comptage permettant la détermination de l'équivalent de dose. Pour cela, l'invention préconise une mesure différentielle des signaux issus de deux diodes identiques formant le capteur et soumises au bombardement neutronique. Une de ces diodes est recouverte par un matériau convertisseur des neutrons incidents en particules chargées, alors que l'autre, servant de témoin, ne l'est pas. On peut ainsi s'affranchir de signaux parasites (bruit, contribution propre des diodes) perturbant la mesure.

Le dispositif selon l'invention alimenté en basse tension ne présente pas de danger électrique. Détecteur actif, il permet de fournir instantanément le résultat de la mesure sans traitement long et fastidieux. De plus, on peut lui adjoindre une alarme déclenchée lorsque l'équivalent de dose franchit un seuil fixé à l'avance. Il est donc particulièrement efficace.

De faible encombrement, de faible poids, le détecteur selon l'invention est facilement transportable. On peut l'accrocher au niveau du tronc, comme sur n'importe quelle autre partie du corps de l'utilisateur.

De manière plus précise, l'invention concerne un dispositif individuel de mesure d'équivalent de dose neutronique. Ce dernier comprend :
(A) un détecteur comportant :
   - une première diode,
   - une seconde diode identique à la première diode, les deux diodes étant disposées côte à côte,
   - un convertisseur de neutrons en particule chargée recouvrant la première diode,
   - un écran transparent aux neutrons recouvrant le convertisseur et la seconde diode, cet écran protégeant le convertisseur et la seconde diode de particules chargées provenant de l'extérieur du détecteur,
(B) un système différentiel connecté aux deux diodes délivrant sur une sortie un signal numérique de différence, ce signal ayant une valeur sensiblement proportionnelle à l'équivalent de dose dû aux neutrons ayant pénétré le convertisseur,
(C) un multiplicateur connecté à la sortie du système différentiel, multipliant le signal de différence par un coefficient déterminé et délivrant sur une sortie un signal numérique représentant l'équivalent de dose,
(D) une source d'alimentation électrique.

A chaque conversion par le convertisseur d'un neutron en particule chargée, la première diode excitée par cette particule va émettre une impulsion de courant dont l'amplitude est corrélée à l'énergie de la particule. Mais des impulsions parasites dues au bruit thermique de la diode, au passage d'électrons créés par des rayonnements γ viennent perturber la mesure. La seconde diode identique à la première n'est pas soumise aux particules chargées provenant du convertisseur. Elle ne délivre donc que des impulsions parasites. La soustraction des taux de comptage des impulsions provenant des deux diodes permet d'obtenir le taux de comptage des impulsions ayant pour origine un neutron incident.

Selon un mode de réalisation particulier, le système différentiel comporte :
- un premier préamplificateur délivrant sur une sortie des signaux impulsionnels,
- un second préamplificateur délivrant sur une sortie des signaux impulsionnels,
- un premier discriminateur connecté à la sortie du premier préamplificateur et ne délivrant sur une sortie que les signaux impulsionnels provenant du premier préamplificateur supérieurs en amplitude à un seuil,
- un second discriminateur connecté à la sortie du second préamplificateur et ne délivrant sur une sortie que les signaux impulsionnels provenant du second préamplificateur supérieurs en amplitude audit seuil,
- un premier compteur connecté par une première entrée à la sortie du premier discriminateur, par une seconde entrée à la sortie du second discriminateur, et délivrant sur une sortie ledit signal de différence résultant d'une soustraction entre le nombre d'impulsions compté sur la première entrée et le nombre d'impulsions compté sur la seconde entrée.

Pour éviter de soustraire entre eux des taux de comptage trop important et entachés d'une grande marge d'erreur, on ne prend pas en compte, grâce au discriminateur, les impulsions de faibles amplitudes dues principalement aux effets parasites.

L'équivalent de dose est affiché par un système d'affichage connecté à la sortie du multiplicateur.

Dans un mode de réalisation particulier, le dispositif comprend un système d'alarme connecté à la sortie du multiplicateur et déclenché lorsque l'équivalent de dose neutronique dépasse un seuil fixé.

Selon une variante de réalisation, le dispositif comprend un second compteur connecté par une première entrée à la sortie du premier discriminateur et par une seconde entrée à la sortie du second discriminateur, ce compteur décomptant, à partir d'une valeur initiale déterminée, chaque impulsion reçue sur sa première entrée et s'incrémentant à chaque impulsion reçue sur sa seconde entrée, ce compteur délivrant sur une sortie un signal de passage à zéro et reprenant la valeur initiale après chaque passage à zéro. La sortie de ce second compteur est connectée à un avertisseur visuel et/ou sonore déclenché à chaque passage à zéro du second compteur.

La source d'alimentation délivre une tension continue comprise entre 2 et 100 V. Pour cette gamme de tension, les diodes présentent une zone désertée comprise entre 10 et 100 micromètres.

Les diodes sont réalisées avec des éléments de faible section efficace aux neutrons incidents (≦ 10⁻²⁸ m²). Ainsi, des impulsions parasites ne sont pas engendrées à l'intérieur des diodes par des réactions nucléaires siègeant dans ces éléments.

Selon une variante de réalisation du présent dispositif les diodes sont aptes à fonctionner à la pression atmosphérique. De cette manière, le dispositif peut être inclus dans un contrôleur individuel sans contrainte particulière.

De manière préférée, l'écran est fabriqué en un matériau choisi parmi l'aluminium 27 et l'aluminium naturel. Son épaisseur est au moins égale à 2 mm.

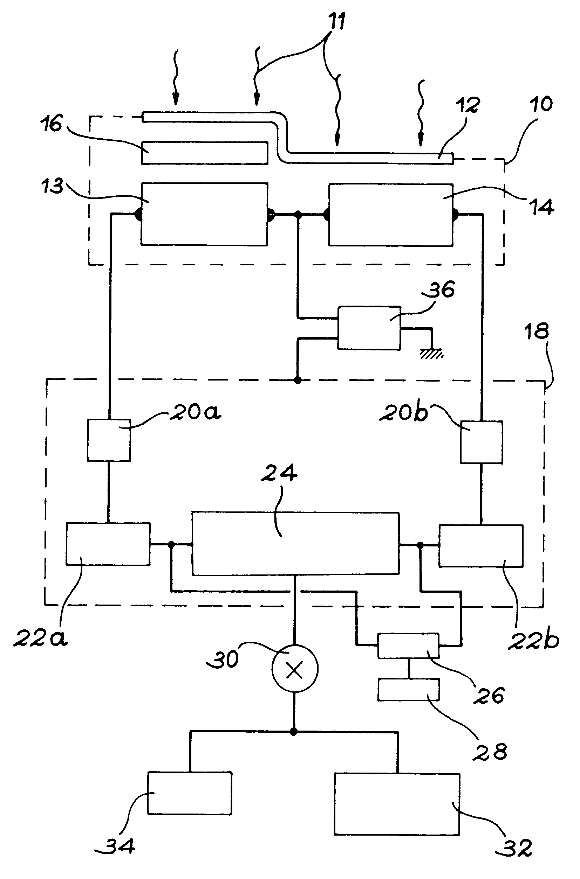

Les caractéristiques et avantages de l'invention apparaîtront mieux après la description qui suit donnée à titre explicatif et nullement limitatif. Cette description se réfère à un dessin annexé sur lequel la figure unique représente un schéma fonctionnel d'un dispositif conforme à l'invention.

Le dispositif conforme à l'invention comprend un détecteur 10 qui mesure la fluence neutronique et délivre un signal apte à être traité électroniquement. Ce détecteur 10 comprend un écran 12 constitué par une feuille d'Al²⁷ par exemple, protégeant les diodes 13 et 14 des particules chargées engendrées dans le milieu extérieur par le passage des neutrons incidents 11. Cet écran présente une faible section efficace pour les neutrons (inférieure à 10⁻²⁸ m²), mais son épaisseur, de 2 mm par exemple, est suffisante pour arrêter les particules chargées d'énergie égale à l'énergie la plus grande du flux neutronique à mesurer.

En fait, cet écran 12 recouvre un convertisseur de neutron en particule chargée 16 et la diode 14. Le convertisseur 16 recouvre uniquement la diode 13.

Les diodes 13 et 14 sont identiques, c'est-à-dire qu'elles présentent des caractéristiques identiques. Elles peuvent être réalisées dans le même substrat de silicium par exemple, ou encore, réalisées dans des substrats différents, mais avec des paramètres de réglage (tension de polarisation, etc...) adpatés de manière connue de l'homme du métier.

Ces diodes présentent une zone désertée comprise entre 10 et 100 micromètres pour une tension d'alimentation comprise entre 2 et 100 V par exemple. Elles sont telles qu'elles fonctionnent à la pression atmosphérique. Leurs éléments constitutifs (contacts, atomes d'implantation, ...) présente une faible section efficace pour les neutrons (≦ 10⁻²⁸ m²).

La surface active des diodes 13, 14 est de 4 cm² par exemple. Ces diodes 13, 14 sont disposées côte à côte de sorte qu'elles sont soumises aux mêmes irradiations (flux neutronique, rayonnement γ, ...)

La diode 13 dont la surface active est recouverte par le convertisseur 16 délivre un signal impulsionnel à chaque traversée par une particule chargée (un proton par exemple). D'autres impulsions parasites sont engendrées par cette diode 13 ; elles sont dues au bruit thermique et aux électrons engendrés par le passage d'un rayonnement γ accompagnant le flux neutronique.

La diode 14, quant à elle, n'étant pas recouverte par un convertisseur 16 n'engendre que des impulsions parasites. Comme nous allons le voir dans la suite de la description, une soustraction permet d'avoir accès à la fluence neutronique pratiquement débarrassé des imprécisions dues aux bruits parasites.

Le convertisseur de neutrons en particule chargée 16 est en matériau hydrogéné : une feuille de polyéthylène dont l'épaisseur est comprise entre 20 micromètres et 1 mm, par exemple.

Des atomes de grande section efficace (au moins égale à 10⁻²⁵ m²) pour les neutrons thermiques et épithermiques sont implantés dans cette feuille. Ces atomes sont choisis parmi le bore, le lithium ou l'hélium. Leur profondeur d'implantation est comprise entre 0,1 et 0,5 micromètres et leur densité se situe entre 10¹² et 10¹⁸ atomes/cm², par exemple.

Le choix de l'épaisseur de la feuille régit sa sensibilité aux neutrons rapides alors que les paramètres de l'implantation concernent plus particulièrement sa réponse aux neutrons thermiques et épithermiques d'énergie intermédiaire. Les différents paramètres sont choisis tels que la sensibilité du convertisseur 16 soit sensiblement identique quelle que soit l'énergie des neutrons incidents.

De cette manière, le nombre de particules chargées émises correspond à un flux proportionnel à l'équivalent de dose quelle que soit l'énergie des neutrons incidents.

Les neutrons 11 traversant l'écran 12 engendrent des particules chargées dans le convertisseur 16. Ces dernières vont exiter la diode 13 qui délivre des signaux impulsionnels comprenant aussi des impulsions parasites. La diode 14 ne délivre que des impulsions parasites.

Un système différentiel 18 connecté par deux entrées à chacune des diodes 13, 14 délivre un signal numérique de différence représentant le comptage des neutrons ayant pénétré le détecteur 10.

Ce système différentiel 18 comprend deux voies de comptage reliées chacune à une des diodes 13, 14. Les impulsions délivrées par les diodes 13, 14 sont comptées puis une soustraction est effectuée entre le nombre d'impulsions provenant de la diode 13 et le nombre de celles provenant de la diode 14.

Chaque voie de comptage comprend un préamplificateur de charge 20a, 20b connecté à une entrée d'un discriminateur 22a, 22b. Ce discriminateur compare l'amplitude des impulsions qu'il reçoit à une valeur de seuil fixée. Les impulsions d'amplitude inférieure à ce seuil sont éliminées. Ce seuil est choisi tel qu'on élimine uniquement des impulsions provenant du bruit thermique ou dues à des photons. Les impulsions sélectionnées sont délivrées sur des sorties des discriminateurs 22a, 22b.

Par ce moyen, on abaisse considérablement le nombre d'impulsions à prendre en compte et on ne risque pas de saturer le compteur 24 connecté par deux entrées aux sorties des discriminateurs 22a et 22b.

Ce compteur 24 compte le nombre d'impulsions provenant du second discriminateur 22b et le soustrait au nombre d'impulsions provenant du premier discriminateur 22a. Il délivre sur une sortie un signal numérique de différence correspondant au nombre de neutrons ayant interagit avec le détecteur 10.

Grâce à ce type de mesure, les impulsions parasites sont éliminées lors de la soustraction. Ceci doit être compris de manière statistique, puisque les impulsions parasites de chaque diode 13 et 14 ne sont pas corrélées, et qu'à chaque impulsion parasite provenant d'une diode ne correspond pas obligatoirement une impulsion parasite provenant de l'autre. Mais en moyenne, les diodes 13 et 14 de caractéristiques identiques délivrent autant de signaux parasites l'une que l'autre : leur soustraction permet d'améliorer notablement la mesure.

Le signal de différence est multiplié grâce à un multiplicateur 30 connecté au premier compteur 24, par un coefficient déterminé de manière à convertir le nombre de coups comptés en une unité telle que le Sievert, qui est l'unité d'équivalent de dose.

Le résultat de la mesure peut être affiché sur un système d'affichage 32 connecté à une sortie du multiplicateur 30.

Un système d'alarme 34 est encore connecté à cette sortie. Ce peut être un signal sonore et/ou visuel qui se déclenche lorsque l'équivalent de dose franchit un seuil fixé.

Dans la réalisation représentée sur la figure, le dispositif comprend un second compteur 26 connecté par deux entrées aux sorties des discriminateurs 22a et 22b. Ce compteur est connecté à un avertisseur 28 sonore et/ou visuel.

Le compteur 26 effectue un décomptage, à partir d'une valeur initiale déterminée, du nombre d'impulsions provenant du premier discriminateur 22a. D'autre part, le compteur est incrémenté chaque fois qu'il reçoit une impulsion provenant du second discriminateur 22b.

Lorsque le compteur 26 passe à zéro, il délivre un signal de passage à zéro et reprend sa valeur initiale. Ce signal déclenche l'avertisseur, ce qui permet d'informer l'utilisateur qu'un seuil d'équivalent de dose fixé a été franchi.

Une source d'alimentation 36, délivrant une tension continue comprise entre 2 et 100 V par exemple, permet de polariser les diodes 13 et 14 ainsi que d'alimenter tous les circuits électroniques en présence.

Tout en restant dans le cadre de l'invention comme revendiquée un tel dispositif peut admettre des variantes.

Ce dispositif individuel peut être conçu à la manière d'un badge, ce qui permet de l'accrocher sur l'utilisateur. Il est peu encombrant et d'un poids n'excédant pas les 300 g. Après chaque utilisation, le premier compteur est remis à zéro. L'équivalent de dose mesuré peut éventuellement servir à des études statistiques.

## Revendications

1. Dispositif individuel de mesure de l'équivalent de dose neutronique comprenant :
(A) un détecteur neutronique (10) comportant une première diode (13) et un convertisseur (16) de neutrons en particule chargée recouvrant la première diode ;
(B) un système différentiel (18) connecté audit détecteur neutronique délivrant sur une sortie un signal numérique de différence, ce signal ayant une valeur sensiblement proportionnelle à l'équivalent de dose dû aux neutrons ayant pénétré le convertisseur ;
(C) un multiplicateur (30) connecté à la sortie du système différentiel, multipliant le signal de différence par un coefficient déterminé et délivrant sur une sortie un signal numérique représentant l'équivalent de dose ;
(D) une source d'alimentation électrique (36),
caractérisé en ce que le détecteur neutronique comporte, en outre, une seconde diode (14) identique à la première diode et disposée côte à côte avec ladite première diode, ainsi qu'un écran (12) transparent aux neutrons recouvrant le convertisseur et la seconde diode et protégeant le convertisseur et la seconde diode de particules chargées provenant de l'extérieur du détecteur.

2. Dispositif selon la revendication 1, caractérisé en ce que le système différentiel (18) comporte :
- un premier préamplificateur (20a) délivrant sur une sortie des signaux impulsionnels ;
- un second préamplificateur (20b) délivrant sur une sortie des signaux impulsionnels ;
- un premier discriminateur (22a) connecté à la sortie du premier préamplificateur (20a) et ne délivrant sur une sortie que les signaux impulsionnels provenant du premier préamplificateur (20a) supérieurs en amplitude à un seuil ;
- un second discriminateur (20b) connecté à la sortie du second préamplificateur (20b) et ne délivrant sur une sortie que les signaux impulsionnels provenant du second préamplificateur (20b) supérieurs en amplitude audit seuil ;
- un premier compteur (24) connecté par une première entrée à la sortie du premier discriminateur (22a), par une seconde entrée à la sortie du second discriminateur (22b) et délivrant sur une sortie ledit signal de différence résultant d'une soustraction entre le nombre d'impulsions compté sur la première entrée et le nombre d'impulsions compté sur la seconde entrée.

3. Dispositif selon la revendication 1, caractérisé en ce qu'il comprend un système d'affichage (32) connecté à la sortie du multiplicateur (30) et affichant l'équivalent de dose neutronique mesurée.

4. Dispositif selon la revendication 1, caractérisé en ce qu'il comprend un système d'alarme (34) connecté à la sortie du multiplicateur (30) et déclenché lorsque l'équivalent de dose neutronique dépasse un seuil fixé.

5. Dispositif selon la revendication 2, caractérisé en ce qu'il comprend :
- un second compteur (26) connecté par une première entrée à la sortie du premier discriminateur (22a) et par une seconde entrée à la sortie du second discriminateur (22b), ce compteur (26) décomptant, à partir d'une valeur initiale déterminée, chaque impulsion reçue sur sa première entrée et s'incrémentant à chaque impulsion reçue sur sa seconde entrée, ce compteur (26) délivrant sur une sortie un signal de passage à zéro et reprenant sa valeur initiale après chaque passage à zéro ;
- un avertisseur (28) connecté à la sortie du second compteur et déclenché à chaque passage à zéro du second compteur (26).

6. Dispositif selon la revendication 1, caractérisé en ce que la source d'alimentation (36) délivre une tension continue comprise entre 2 et 100 V.

7. Dispositif selon la revendication 1, caractérisé en ce que les diodes (13, 14) présentent une zone désertée comprise entre 10 et 100 micromètres lorsqu'elles sont polarisées en inverse par une tension comprise entre 2 et 100 V.

8. Dispositif selon la revendication 1, caractérisé en ce que les diodes (13, 14) sont réalisées avec des éléments ayant une section efficace pour les neutrons au plus égale à 10⁻²⁸ m².

9. Dispositif selon la revendication 1, caractérisé en ce que les diodes (13, 14) sont aptes à fonctionner à la pression atmosphérique.

10. Dispositif selon la revendication 1, caractérisé en ce que l'écran (12) est fabriqué en un matériau choisi parmi l'aluminium 27 et l'alumimium naturel.

11. Dispositif selon la revendication 9, caractérisé en ce que l'écran (12) présente une épaisseur au moins égale à 2 mm.

12. Dispositif selon la revendication 1, caractérisé en ce que le convertisseur (16) est en matériau hydrogéné implanté avec des atomes de section efficace pour les neutrons au moins égale à 10⁻²⁵ m².

13. Dispositif selon la revendication 12, caractérisé en ce que le matériau hydrogéné est du polyéthylène.

14. Dispositif selon la revendication 12, caractérisé en ce que le convertisseur (16) présente une épaisseur comprise entre 20 micromètres et 1 mm.

15. Dispositif selon la revendication 12, caractérisé en ce que les atomes sont implantés avec une densité comprise entre 10¹² et 10¹⁸ atomes/cm².

16. Dispositif selon la revendication 12, caractérisé en ce que les atomes sont implantés à une profondeur d'implantation comprise entre 0,1 à 0,5 micromètre.

## Patentansprüche

1. Individuelle Vorrichtung zur Messung der Neutronen-Äquivalentdosis, umfassend
(A) einen Neutronendetektor (10), der eine erste Diode (13) und einen die erste Diode bedeckenden Konverter (16) von Neutronen in geladene Teilchen umfaßt,
(B) ein an genanntem Neutronendetektor angeschlossenes Differenzsystem (18), das an einem Ausgang ein digitales Differenzsignal liefert, wobei dieses Signal einen Wert hat, der im wesentlichen zur Äquivalentdosis proportional ist, die den Neutronen, die den Konverter durchdrungen haben, zukommt,
(C) einen an dem Ausgang des Differenzsystems angeschlossenen Multiplizierer (30), der das Differenzsignal mit einem festgelegten Koeffizienten multipliziert und an einem Ausgang ein digitales Signal liefert, das die Äquivalentdosis darstellt, und
(D) eine Quelle zur elektrischen Versorgung (36),
dadurch gekennzeichnet, daß der Neutronendetektor ferner eine zweite Diode (14), die mit der ersten identisch ist und Seite an Seite mit dieser ersten Diode angeordnet ist, sowie einen für Neutronen transparenten Schirm (12) umfaßt, der den Konverter und die zweite Diode bedeckt und den Konverter und die zweite Diode vor geladenen Teilchen schützt, die vom Äußeren des Detektors herstammen.

2. Vorrichtung nach Anspruch 1, dadurch gekennzeichnet, daß das Differenzsystem (18)
- einen ersten Vorverstärker (20a), der an einem Ausgang Impulssignale liefert,
- einen zweiten Vorverstärker (20b), der an einem Ausgang Impulssignale liefert,
- einen ersten Diskriminator (22a), der am Ausgang des ersten Vorverstärkers (20a) angeschlossen ist und der an einem Ausgang nur vom ersten Vorverstärker (20a) stammende Impulssignale liefert, die in der Amplitude größer als eine Schwelle sind,
- einen zweiten Diskriminator (22b), der am Ausgang des zweiten Vorverstärkers (20b) angeschlossen ist und der an einem Ausgang nur vom zweiten Vorverstärker (20b) stammende Impulssignale liefert, die in der Amplitude größer als genannte Schwelle sind, und
- einen ersten Zähler (24) umfaßt, der über einen ersten Eingang am Ausgang des ersten Diskriminators (22a) und über einen zweiten Eingang am Ausgang des zweiten Diskriminators (22b) angeschlossen ist und der an einem Ausgang genanntes Differenzsignal liefert, das Ergebnis einer Subtraktion zwischen der am ersten Eingang gezählten Impulszahl und der am zweiten Eingang gezählten Impulszahl ist.

3. Vorrichtung nach Anspruch 1, dadurch gekennzeichnet, daß sie eine Anzeigeeinrichtung (32) umfaßt, die am Ausgang des Multiplizierers (30) angeschlossen ist und die die gemessene Neutronen-Äquivalentdosis anzeigt.

4. Vorrichtung nach Anspruch 1, dadurch gekennzeichnet, daß sie eine Alarmeinrichtung (34) umfaßt, die am Ausgang des Multiplizierers (30) angeschlossen ist und die ausgelöst wird, wenn die Neutronen-Äquivalentdosis eine festgesetzte Schwelle überschreitet.

5. Vorrichtung nach Anspruch 2, dadurch gekennzeichnet, daß sie
- einen zweiten Zähler (26), der über einen ersten Eingang am Ausgang des ersten Diskriminators (22a) und über einen zweiten Eingang am Ausgang des zweiten Diskriminators (22b) angeschlossen ist, wobei dieser Zähler (26) von einem festgelegten Anfangswert an jeden an seinem ersten Eingang empfangenen Impuls abwärts zählt und sich bei jedem an seinem zweiten Eingang empfangenen Impuls inkrementiert, wobei dieser Zähler (26) an einem Ausgang ein Signal für den Nulldurchgang liefert und seinen Anfangswert nach jedem Nulldurchgang wieder annimmt, und
- einen Melder (28) umfaßt, der am Ausgang des zweiten Zählers angeschlossen ist und der bei jedem Nulldurchgang des zweiten Zählers (26) ausgelöst wird.

6. Vorrichtung nach Anspruch 1, dadurch gekennzeichnet, daß die Quelle zur Versorgung (36) eine Gleichspannung zwischen 2 und 100 V liefert.

7. Vorrichtung nach Anspruch 1, dadurch gekennzeichnet, daß die Dioden (13, 14) eine zwischen 10 und 100 µm liegende Verarmungszone zeigen, wenn sie durch eine Spannung zwischen 2 und 100 V invers polarisiert werden.

8. Vorrichtung nach Anspruch 1, dadurch gekennzeichnet, daß die Dioden (13, 14) mit Elementen aufgebaut sind, die einen Wirkungsquerschnitt für Neutronen von höchstens 10⁻²⁸ m² besitzen.

9. Vorrichtung nach Anspruch 1, dadurch gekennzeichnet, daß die Dioden (13, 14) geeignet sind, unter Atmosphärendruck zu arbeiten.

10. Vorrichtung nach Anspruch 1, dadurch gekennzeichnet, daß der Schirm (12) aus einem Material hergestellt ist, das unter Aluminium-27 und natürlichem Aluminium gewählt ist.

11. Vorrichtung nach Anspruch 9, dadurch gekennzeichnet, daß der Schirm (12) eine Dicke von mindestens 2 mm hat.

12. Vorrichtung nach Anspruch 1, dadurch gekennzeichnet, daß der Konverter (16) aus wasserstoffhaltigem Material besteht, das mit Atomen eines Wirkungsquerschnitts für Neutronen von mindestens 10⁻²⁵ m² implantiert ist.

13. Vorrichtung nach Anspruch 12, dadurch gekennzeichnet, daß das wasserstoffhaltige Material Polyethylen ist.

14. Vorrichtung nach Anspruch 12, dadurch gekennzeichnet, daß der Konverter (16) eine Dicke zwischen 20 µm und 1 mm besitzt.

15. Vorrichtung nach Anspruch 12, dadurch gekennzeichnet, daß die Atome mit einer zwischen 10¹² und 10¹⁸ Atome/cm² liegenden Dichte implantiert sind.

16. Vorrichtung nach Anspruch 12, dadurch gekenzeichnet, daß die Atome mit einer Implantationstiefe zwischen 0,1 und 0,5 µm implantiert sind.

## Claims

1. Individual device for measuring the neutron dose equivalent incorporating:
(A) a neutron detector (10) having a first diode (13) and a converter (16) for converting neutrons into charged particles covering the first diode;
(B) a differential system (18) connected to said neutron detector supplying on an output a digital differential signal, said signal having a value substantially proportional to the dose equivalent due to the neutrons having penetrated the converter;
(C) a multiplier (30) connected to the output of the differential system and which multiplies the differential signal by a given coefficient and which supplies on an output a digital signal representing the dose equivalent;
(D) an electric power supply;
characterized in that the neutron detector also has a second diode (14) identical to the first diode and positioned alongside the first diode, as well as a screen (12) which is transparent to the neutrons covering the converter and the second diode and protecting the converter and the second diode from charged particles coming from the exterior of the detector.

2. Device according to claim 1, characterized in that the differential system (18) comprises:
- a first preamplifier (20a) supplying on an output pulse signals,
- a second preamplifier (20b) supplying on an output pulse signals,
- a first discriminator (22a) connected to the output of the first preamplifier (20a) and only supplying on an output pulse signals from the first preamplifier (20a) whose amplitude exceeds a threshold,
- a second discriminator (20b) connected to the output of the second preamplifier (20b) and only supplying at an output pulse signals from the second preamplifier (20b) whose amplitude exceeds said threshold,
- a first counter (24) connected by a first input to the output of the first discriminator (22a), by a second input to the output of the second discriminator (22b) and supplying on an output the differential signal resulting from a subtraction between the number of pulses counted on the first input and the number of pulses counted on the second input.

3. Device according to claim 1, characterized in that it comprises a display system (32) connected to the output of the multiplier (30) and displaying the measured neutron dose equivalent.

4. Device according to claim 1, characterized in that it comprises an alarm system (34) connected to the output of the multiplier (30) and triggered when the neutron dose equivalent exceeds a fixed threshold.

5. Device according to claim 2, characterized in that it comprises a second counter (26) connected by a first input to the output of the first discriminator (22a) and by a second input to the output of the second discriminator (22b) said counter (26) counting down, from a predetermined initial value, each pulse received on its first input and counting up for each pulse received on its second input, said counter (26) supplying on one output a zero passage or zeroing signal and reassumes its initial value after each zero passage and a detector (28) connected to the output of the second counter and triggered at each zero passage of the second counter (26).

6. Device according to claim 1, characterized in that the power supply (36) supplies a d.c. voltage between 2 and 100V.

7. Device according to claim 1, characterized in that the diodes (13,14) have a depletion range between 10 and 100 micrometres, when they are reverse biased by a voltage between 2 and 100 V.

8. Device according to claim 1, characterized in that the diodes (13,14) are produced with elements having an effective cross-section for the neutrons of at the most 10⁻²⁸ m².

9. Device according to claim 1, characterized in that the diodes (13,14) are able to operate at atmospheric pressure.

10. Device according to claim 1, characterized in that the screen (12) is made from a material chosen from among aluminium 27 and natural aluminium.

11. Device according to claim 9, characterized in that the screen (12) has a thickness of at least 2 mm.

12. Device according to claim 1, characterized in that the converter (16) is made from a hydrogenated material implanted with atoms having an effective cross-section for the neutrons of at least 10⁻²⁵ m².

13. Device according to claim 12, characterized in that the hydrogenated material is polyethylene.

14. Device according to claim 12, characterized in that the converter (16) is between 20 micrometres and 1 mm thick.

15. Device according to claim 12, characterized in that the atoms are implanted with a density between 10¹² and 10¹⁸ atoms/cm².

16. Device according to claim 12, characterized in that the atoms are implanted at an implantation depth between 0.1 and 0.5 micrometre.
